# EUROPEAN PATENT APPLICATION

(11) **EP 1 061 183 A2**
(43) Date of publication of application: **20.12.2000**
(21) Application number: 00305163.8
(22) Date of filing: 19.06.2000
(51) Int. Cl.: E02D 29/12, H02G 9/10

(54) **Improvements in or relating to underground junction boxes**

(30) Priority: 18.06.1999 GB 9914113; 07.10.1999 GB 9923727; 29.10.1999 GB 9925570
(71) Applicant: SWINTEX LIMITED, Bury Lancashire BL9 9NX (GB)
(72) Inventor: Houghton, Harry Vincent, Bolton, BL7 9EW (GB); Wallwork, Peter, Harwood, Bolton, BL2 4JG (GB); Snowden, David, South Wirral, CH88 2GH (GB)
(74) Representative: Goodwin, Mark

(57) **Abstract**

A stackable moulded junction box section, suitable for construction of underground junction boxes. The section includes integrally moulded support means (55,56,57). The support means can comprise a step (52) and can also comprise a receiving means (56,57) for receiving and supporting a support (58), which may be moulded integrally with the section and then separated for use. The section may comprise inner (50) and outer (51) walls joined by cross-reinforcement portions (52) which divide the space between the walls into cavities (53). Provision to form apertures between the cavities, which may comprise a knock out portion (54), can be provided. The apertures may be open to the bottom of the section, so that the section may be placed over a conduit. The section may include projections to enable it to be stacked on end. In another embodiment the section is formed from two or more separate interlocking components.

## Description

The present invention relates to junction boxes for installation underground.

Underground junction boxes, also called underground inspection and manhole chambers, are widely used to accommodate and provide access to underground services, for example electricity and telecommunications cables, gas mains and drains.

Traditionally, underground junction boxes were constructed in situ from bricks. More recently plastic junction boxes have been used, a benefit of which is a reduction in the amount of on-site labour required for their construction. One type of plastic junction box is described in GB 2274297, it comprises a stack of square or rectangular chamber sections formed by cutting and jointing extruded or blow moulded lengths of plastic material.

Although assembling this type of junction box generally requires less labour than building a brick junction box considerable labour is still required to install internal fittings, for example cable supports and steps. Such fittings conventionally comprise separate metal components which are installed into a completed junction box using bolts or screws. The provision of these separate components is expensive and installing them time consuming. Also, errors in installation can result in badly fitted or placed components.

Another problem experienced with the type of junction box described in GB 2274297 is in providing a structure of sufficient strength to resist external forces when installed underground. Material surrounding an underground junction box, for example earth and road building materials, can exert a considerable force on the walls of the junction box, causing them to deform. This is undesirable and can be exacerbated by the tendency of plastic to creep when under load.

The present invention has been made in consideration of these and other problems associated with known junction boxes.

According to a first aspect of the present invention there is provided a stackable moulded junction box section including an integrally moulded support means.

The section is preferably comprised in a junction box comprising a stack of moulded sections.

The section is preferably moulded from plastic using compression or injection moulding techniques, although any other suitable technique could be used. The section preferably comprises polymers from the polyolefin family. Other suitable materials could, however, be used. The section preferably comprises a high proportion of recycled material.

The support means may comprise a step, cable support or other structure. The support means may also comprise a receiving means for receiving and supporting a separate component, for example a step, cable support or junction box. The receiving means and a component to be supported preferably respectively comprise engageable formations.

Provision of an integrally moulded support overcomes the need for subsequent installation of supports and hence labour and problems associated with the poor fitting of additional components. Where the support is a receiving means this allows a number of different types of support to be installed in a given location. More than one support means may be provided on a section. Where more than one receiving means is provided this allows a component to be installed at different positions on the section.

The provision of integrally moulded supports also confers a number of knock-on' benefits. With traditional underground junction boxes installation of internal fittings is usually performed by the contractor who constructed or installed the box. In many cases it is found that the internal fittings are installed poorly, in an insufficient number or not at all. This is often due to the contractor's desire to save time and money, especially towards the final stages of construction. Where integrally moulded supports are provided this reduces the labour and craft content of the junction box. As supports will always be present, or easily fitted into receiving means, there will be a more frequent use of supports to support cables or other services passing through the junction box. This leads to a reduced frequency of broken cables, especially fibre optic cables, and consequent cost savings.

Components to be supported by a receiving means are preferably moulded from plastic. More preferably, they are moulded in the same moulding operation used to form a junction box section. When moulded this way, the components may be formed integrally with the junction box section. A single structure may then be supplied and the junction box and component separated for use. When moulded integrally, a junction box and component are preferably joined so that they may be detached, for example by a frangible portion. This reduces the number of inventory items for the contractor installing the junction box to control.

In one embodiment a receiving means comprises an upwardly extending slot with an open top and space behind. A support for installation into the receiving means includes a relatively narrow portion, arranged to fit into the slot, with relatively broad regions either side that will fit behind but not pass through the slot. The support may be slid into the slot from above.

A support may be a ranged to be simultaneously received into the receiving means of more than one stacked section. This helps to spread a load to be supported between sections. It can also help to align stacked sections.

It is preferred that any support provided on the section, whether integrally moulded or supported by an integrally moulded receiving means, is capable of supporting a load of at least 2KN for at least 30 seconds.

The section preferably takes the form of a short open ended tube having an inner wall, defining an opening, and an outer wall. The outer wall is preferably convex in shape. This helps the section resist compressive forces. It is preferred that the walls of a junction box formed from stacked sections are able to resist inwardly directed forces of at least 3KN and preferably at least 6KN for at least 30 seconds without any significant deformation. The inner wall may define an opening of any suitable shape but will typically define an opening of size and shape corresponding to the type of cover to be fitted over the junction box. In one embodiment the opening is generally rectangular, in another it is circular. In the latter embodiment the sections may take the form of annular rings.

Where the outer wall of the section is convex there may be provided projections which serve as supports which enable the section to stand stably on end on its outer wall. The supports also preferably enable a section to be supported on end on its outer wall on another similarly oriented section. The projections are preferably integrally formed with the section. Where the section is generally rectangular a projection is preferably provided at each corner and each projection preferably includes two perpendicular flat outer surfaces which lie on two sides of and/or form the corners of a rectangle surrounding the section. Provision of projections which enable sections to be safely stood on their outer walls, on end, allows the sections to be handled, stored and transported in this orientation. This is advantageous because it is convenient to handle sections by passing the fork of a fork lift truck through the opening they define. This is only possible if they can be stood stably on end, which could cause problems with a section having a convex outer wall. This and other advantages of such projections are discussed further below.

Preferably, a number of cavities are formed between the inner and outer walls. Between the cavities the walls are preferably joined by cross-reinforcement portions. By tying the inner and outer walls together the ability of the structure to resist compressive forces is increased. A section including cavities would be difficult, if not impossible, to produce using an extrusion process. When oriented as for normal use the cavities are preferably open towards the bottom of the section.

Provision is preferably made for the formation of apertures through the section, to enable services to pass into an assembled junction box. Preferably an aperture is formed through the inside wall and the region between the inside and outside walls, leading to a frangible, or otherwise removable, region of corresponding shape to the aperture formed in the outer wall. This region may thus be knocked or cut out to form an aperture through the section. Where an aperture is formed, the region between the inside and outside walls is preferably enclosed by sidewalls. The cut out portion and frangible region are preferably formed adjacent the lower edge of the section so that, when the frangible region has been knocked out, the resultant opening is open to the bottom of the section.

The shape of the opening is preferably such that it can be placed over and snugly accommodate a service conduit.

The section may include one or more upstanding formations on its top surface. These are preferably arranged to fit into cavities open to the bottom of another similar section. The formations are preferably moulded integrally with the section and may be hollow or solid. They are preferably arranged to contact the inside of the outer wall of a section placed on top. The projections could take the form of pegs, blocks or any other suitable form but are preferably of corresponding shape to and arranged to fit closely into the cavities of a similar section. The formations preferably extend above the top surface of the section by at least 10% and more preferably by at least 50% of the height of the section. The formations preferably extend over points where provision is made to form apertures through the section. Provision of upstanding sections allows stacked sections to engage with one another. This assists in their resisting external forces when buried.

In one embodiment the section is moulded as a single piece.

In other embodiments the section comprises two or more separate pieces that may be assembled to form a complete section. Each piece preferably respectively includes a cooperating formation which enables it to be interlocked with another piece. A locking means may be provided to retain the pieces together. It is preferred that each piece includes both a male and female cooperating formation. In one arrangement a section of generally rectangular cross-section is formed from two portions joined together along the shorter sides of the rectangle. The two portions are preferably identical.

Provision of multi piece sections is advantageous where large sections are required as it reduces the mass of components to be handled. Two or more piece sections can also be packed more space efficiently than single piece sections which, because they are stackable, generally cannot nest. The separate pieces would then be assembled on site. It is estimated that forming sections from two pieces will halve the cost of their transportation. A similar benefit is afforded at the moulding stage. Pieces of sections can be more space efficiently arranged than whole sections. In some arrangements it is possible to mould one and a half sections simultaneously using the same compression moulding apparatus that would be required to mould a single one piece section.

A stack of junction box sections may be tied together using an additional component or components. For example one or more tie bars could be provided that extend through aligned apertures formed through each section of a stack.

A junction box may comprise any number of stacked sections. It is preferred that the upper and lowermost sections of a stack do not include any provision for the formation of apertures. It is generally not advisable to have cables or other service conduits passing through these sections. Without provision for the formation of apertures this is prevented.

According to a second aspect of the present invention there is provided a stackable moulded junction box section comprising two or more separately formed interlocking portions.

According to a third aspect of the present invention there is provided a stackable moulded junction box section comprising a short open ended tube the outside surface of which is convex.

In order that the invention may be more clearly understood embodiments thereof will now be described, by way of example, with reference to the accompanying drawings in which:
- Figure 1: shows a plan view of a junction box section;
- Figure 2: shows an underplan view of the junction box section of Figure 1;
- Figure 3: shows a side view of the junction box section of Figure 1;
- Figure 4: shows an end view of the junction box section of Figure 1;
- Figure 5: shows a vertical cross-section through one side of two stacked junction box sections, along with a cable support bracket;
- Figure 6: shows a similar view to Figure 5, but with the bracket engaged with the junction box sections;
- Figure 7: shows a plan view of the bracket of Figure 5;
- Figure 8: shows a perspective view of part of another embodiment of two stacked junction box sections along with a fillet;
- Figure 9: shows an elevational view of the sections of Figure 8 with the fillet in place;
- Figure 10: shows a plan view of an embodiment of a two piece junction box section;
- Figure 11: shows a plan view of another embodiment of a two piece junction box section;
- Figure 12: shows a side elevational view of another alternative embodiment of junction box sections, stacked for transportation;
- Figure 13: shows a side view of a further embodiment of a junction box section;
- Figure 14: shows an underplan view of the embodiment of Figure 13; and
- Figure 15: shows a stack of sections similar to that of Figures 13 and 14.

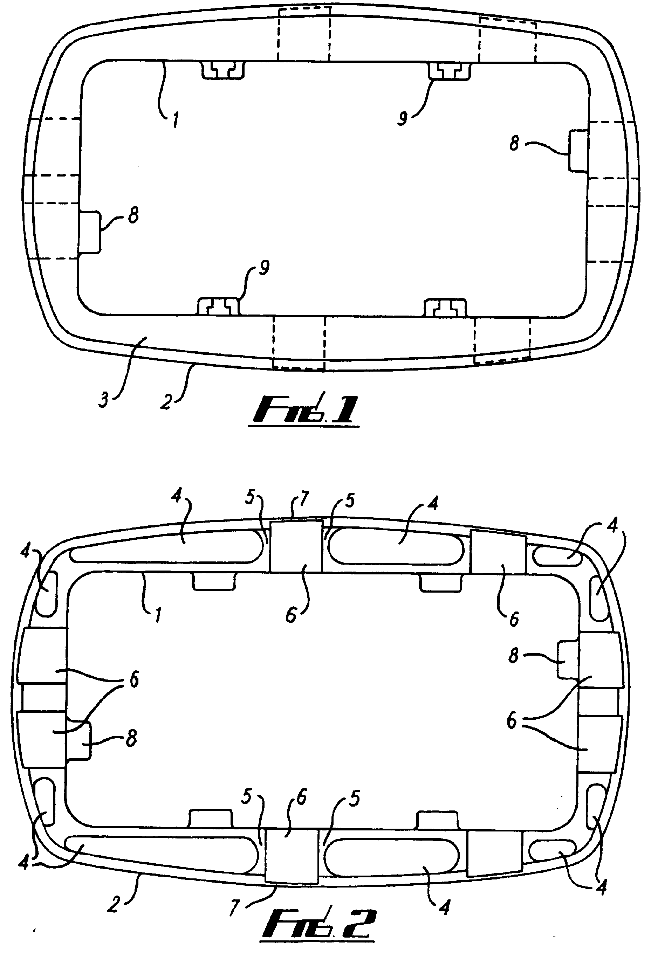

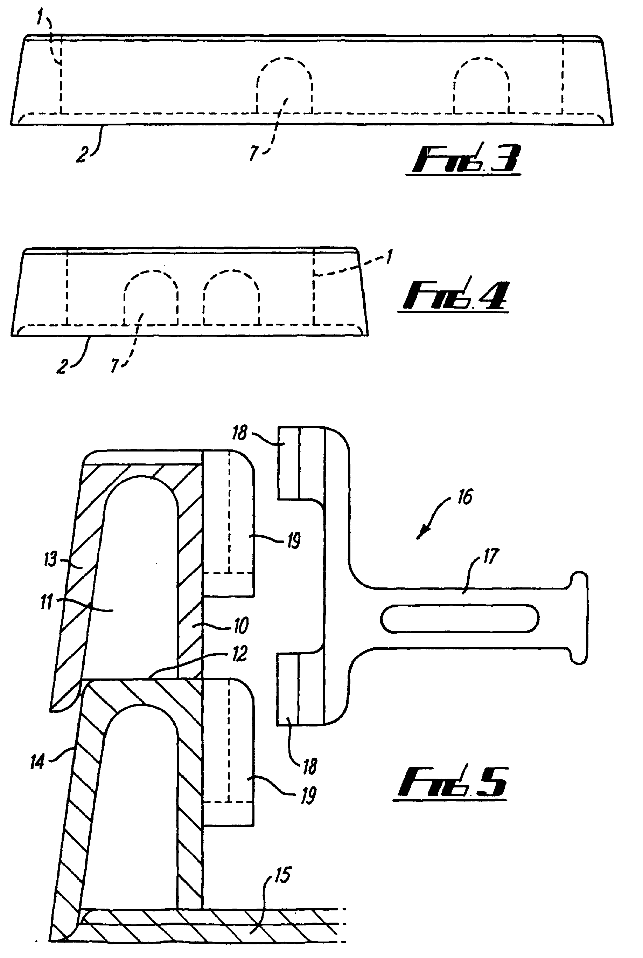

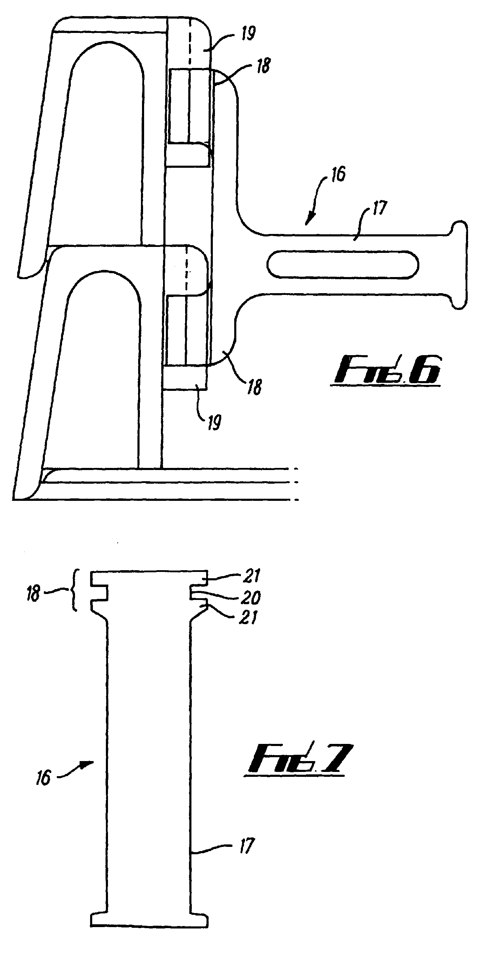

Referring to Figures 1 to 4 a junction box section is compression moulded in one piece from recycled plastics material comprising at least 60% polymer from the polyolefin family. The section takes the form of a short open ended tube and comprises inner 1 and outer 2 side walls joined by a top portion 3. The region between the inner and outer walls is divided into a number of cavities 4 by integrally formed cross reinforcement portions 5. The cavities 4 are open to the bottom of the section. Inclusion of cavities reduces the amount of material required to make the structure and hence its weight and cost.

As used herein the words "top" and "bottom" refer to the section as illustrated in figures 1 to 4 which is the orientation in which it would normally be used.

The inside wall 1 defines an opening of generally rectangular cross-section. The size of the opening is compatible with the size of a cover or grating to be fitted to a junction box formed by the section. The performance of such covers or gratings is prescribed by EN (European Norm) - 124.

The outside wall 2 of each side of the section is convex. In plan view it takes the form of an elliptical curve with the radius of curvature increasing towards the end of each side. This increases the ability of the section to resist inward collapse when the sides are subject to load. This is important where sections are used to construct an underground junction box as the surrounding earth, or infill, can exert a considerable force on the side walls. The bottom of the outer side wall 2 also extends away from and beyond the inner side wall. The bottom of the section is thus wider than the top. Thus if placed on a flat surface the section would rest on the bottom edge of the outer side wall 2. These features enable sections to be stacked.

In practice however, in use, the lowermost section forming a junction box would rest on a prepared dry mix base into which the bottom edge of the outer wall would penetrate. Alternatively the lowermost section could be placed over a plastic base.

When stacked the bottom of the inner side wall 1 and cross reinforcement portions 5 of one section will be supported on the top portion 3 of the section below. The bottom of the outer wall 2 of the upper section will extend around and in close association with the top surface of the section below. This keeps the sections in alignment and prevents ingress of soil or other contaminants between them.

A number of apertures 6 are formed through the inner wall 1. These apertures lead to a region between the inner 1 and outer walls 2 between cross reinforcement portions 5, which form sidewalls, to an area 7 of the outer wall 2 which is of reduced thickness and may include variations in thickness, for example channels, to serve as a guide or to facilitate knocking or cutting out all or part of the area 7.

The area of reduced thickness may be easily removed by knocking or cutting it out to form an aperture through the side of the section to provide for the passage of cables, or other services, into a junction box of which the section forms part.

The apertures 6 are distributed asymmetrically along the length of each of the longer sides of the section. By turning the section around it is possible to obtain four different aperture positions on each longer side, without needing to allow for four apertures in one side, which would weaken the section.

When a region of reduced thickness 7 is removed to form an opening through the side of the section, that opening will also be open to the bottom of the section. The section can therefore be placed over and lifted away from service conduits or cables that pass into a junction box, rather than the cables having to be threaded through a hole. This is particularly advantageous where remedial work is to be carried out on an existing cable. Were the opening not open to the bottom of the section it may be necessary to cut the cable.

Moulded integrally with the section are two internally projecting steps 8 to aid access to a junction box formed from sections. The steps are located over apertures through which cables may pass in use. They therefore provide a degree of protection to any cables passing therethrough.

Also moulded integrally with the section are four supports 9 comprising an upright slot leading to an enclosed region of T-shaped cross-section the top of which is open and the bottom of which is closed.

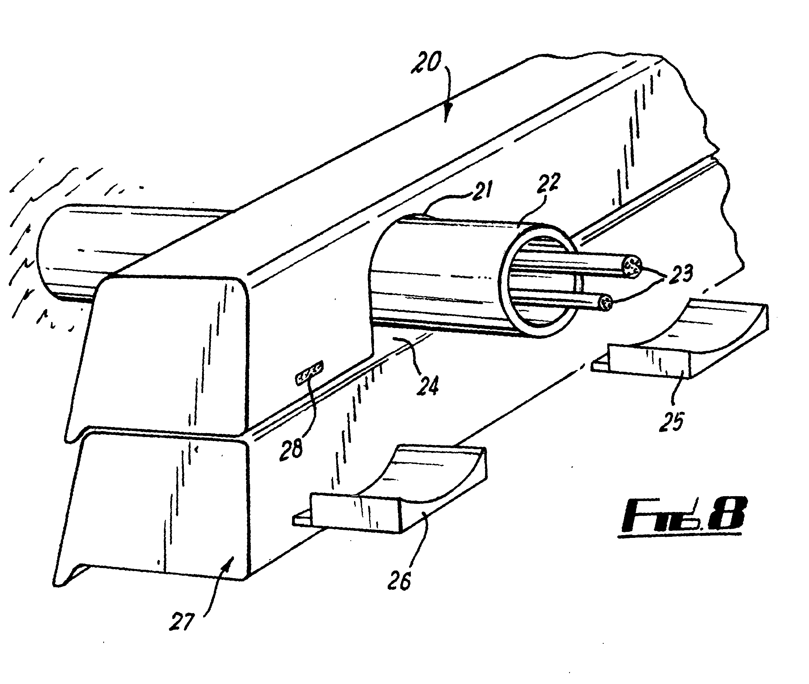

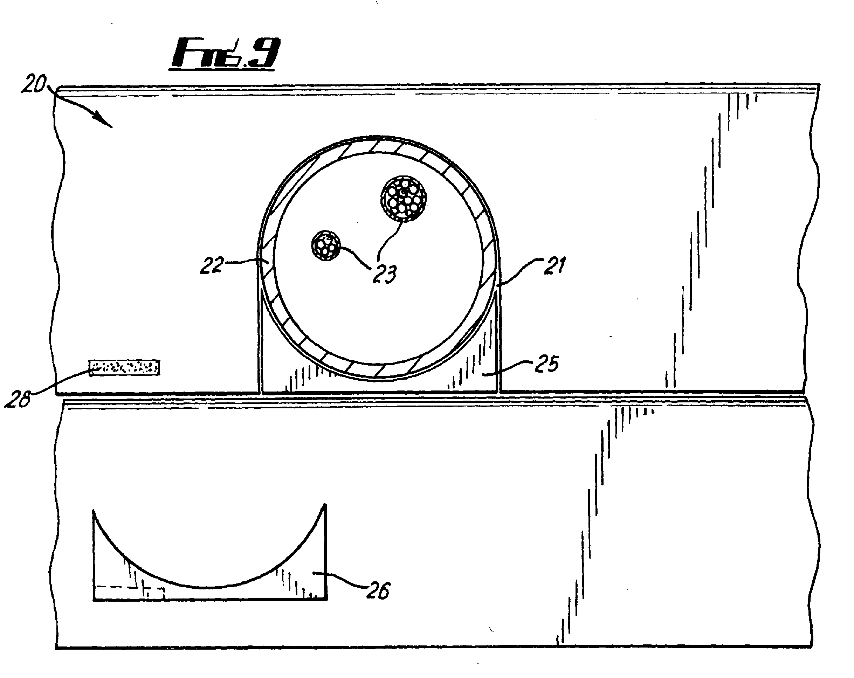

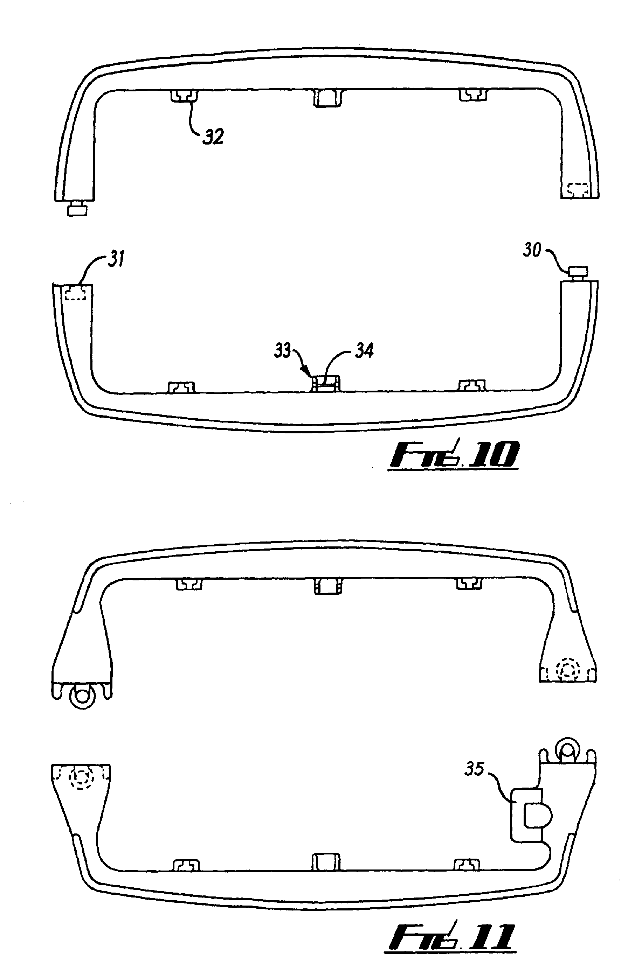

Figures 5 and 6 show part of two stacked sections. Referring to these figures, the inner wall 10 and cross-reinforcement portions 11 of the upper section are supported on the top 12 of the lower section. The outer wall 13 of the top section extends below the top 12 of the lower section and lies around and in close association with the periphery of the outer wall 14 of that section. This assists in aligning the upper and lower sections.

The lower section is the lowermost section forming a junction box and is placed over a base portion 15, which forms the bottom of the junction box. Alternatively it could be placed onto a prepared surface.

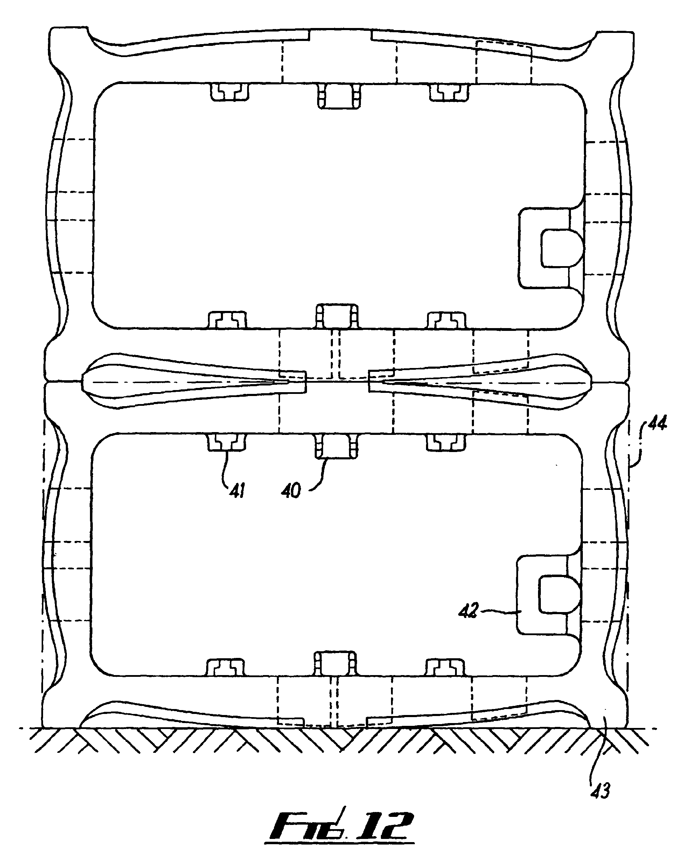

A cable support 16, taking the form of a bracket is shown displaced from the stacked sections. A plan view of the support 16 is shown in Figure 7.

The support 16 includes an arm 17 and two formations 18 shaped to cooperate with the supports 19 of the section. The shaped formations include a relatively narrow portion 20 with relatively broad portions 21 either side. The formations 18 are spaced apart by an amount corresponding to the spacing of the receiving means 19 of the two stacked sections.

The formations 18 can be slid into the slots of the supports 19 until they rest at the bottom of the receiving means as shown in Figure 6. The arm 17 is disposed off centre in relation to the formations. Thus, by inverting the support 16 it is possible to locate the arm in two different positions. The position of the arm could further be adjusted by packing out the formations 18 with shims so that they will not pass so far into the supports 19. These could conveniently be moulded integrally with the support 19 so as to be frangibly connected thereto. Thus, the desired height of the bracket could be obtained by removing a number of shims.

Different supports could be provided. For example, the arm of the shown support could be replaced with a step. The lower formation could be replaced with a portion designed simply to rest on the surface of the section.

Providing upper and lower mounting points for the bracket serves to brace the bracket and enhance its load bearing capacity. When a bracket, or other support, is engaged with two, or more, stacked sections it assists in keeping the sections in alignment.

A junction box would typically comprise a lower section with a base portion as shown in Figure 6, a number of intermediate sections and an upper section. Where a junction box is used to accommodate cables it is preferred that they do not pass through either the upper or lowermost sections, to avoid the risk of damage or contamination. As such the upper and lowermost sections preferably do not include any provision for apertures to be made through their sidewalls. In fact, because provision for the formation of apertures reduces the ability of a section to resist inwardly directed forces caused by infill surrounding a buried junction box it is desirable that a minimum of sections with such provision are used. In a preferred embodiment five sections are used to form a junction box. The top middle and bottom sections do not include any provision for apertures to be made, the other two do. This still allows up to sixteen apertures to be made which is more than enough for most applications. Overlap of stacked sections, as seen in figures 5 and 6, helps distribute the force caused by infill between the sections. Thus, the sections with no provision for forming apertures can help support those that do.

In use, a junction box would be built underground, a frame would be supported on the box and a cover or grating supported on the frame. As an alternative the uppermost section could be shaped to receive and support a cover. The junction box must be sufficiently strong to support any load that the cover or grating would be expected to support. Typically, a junction box should be capable of supporting a mass of 10 tonnes.

When a frame for supporting a cover is supported on a junction box it is usually supported on a layer of sand and cement grout applied to the top of the junction box. One function of the grout is to enable the frame and any cover supported on it to be aligned with the surrounding ground. This is usually necessary where a junction box is installed on sloping ground. The bottom of the hole in which a junction box is installed is usually horizontal. Therefore, on sloping ground, the top surface of the junction box will lie at an angle to the ground. The sand and cement grout can be used to provide a surface generally parallel to the ground on which to install the cover frame. To aid adhesion of the grout to the junction box the top of its uppermost section preferably has a keying surface to which grout will readily adhere. The keying surface may be textured, for example with a diamond grid relief pattern.

Where the uppermost section of a junction box is shaped to receive and support a cover, without the need for an additional frame, it preferably includes a recess in its top surface to accommodate the cover. The recess may include a number of detachable, possibly frangibly detachable, shims which may be removed as desired to alter the angle at which the cover is supported, to accommodate sloping ground.

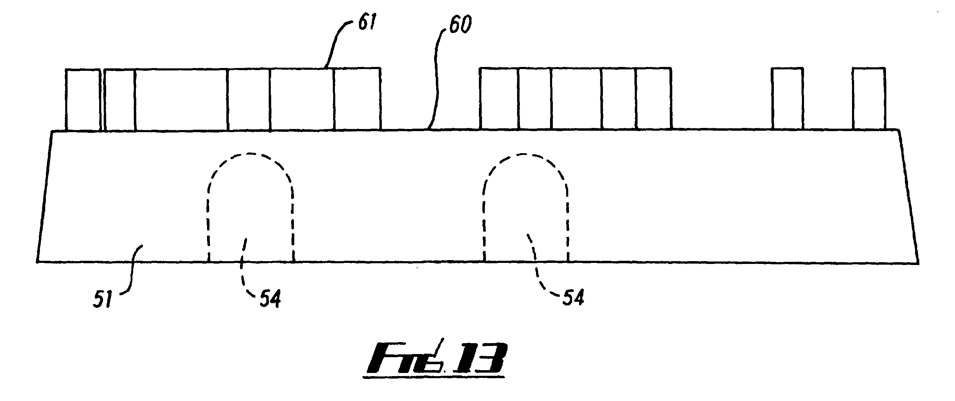

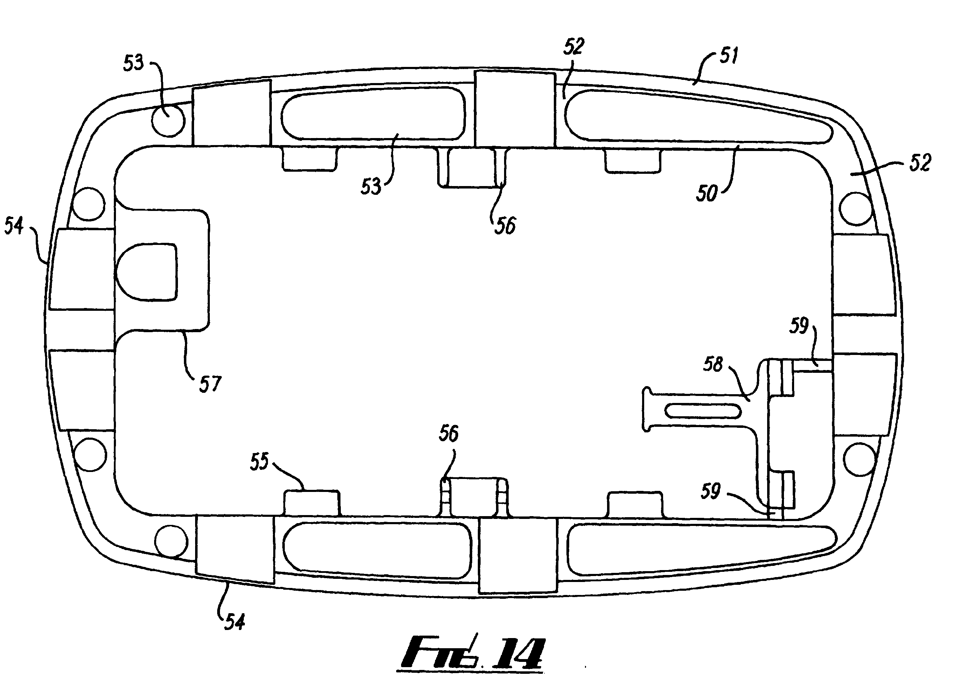

Figures 8 and 9 show part of two stacked sections. The upper section 20 includes an opening 21 through which a service conduit 22 carrying cables 23 extends. The opening 21 takes the form of a curved arch, in cross-section, and is open towards the bottom so that the section 20 can be placed over the conduit 22. The conduit 22 is circular in cross-section and the upper half of the opening 21 is of a corresponding shape, so that the conduit 22 fits closely into the opening, this helps prevent ingress of soil or other contaminants into a junction box formed by the sections, between the conduit 22 and opening 21.

In order that the section 20 may be placed over and lifted away from the conduit 22, the width of the lower half of the opening 21 must exceed the diameter of the conduit 22. Because the conduit 22 is circular this leads to gaps 24 between conduit and opening. To fill these gaps, to prevent ingress of soil or other contaminants, a shaped moulded plastic fillet 25 is provided. The fillet is shaped to fill the gap between the conduit, edges of the opening 21 and top of the lower section 27. The fillet has an upper concave surface and a lower flat surface. The fillet 25 is moulded integrally with the section and may then be separated from the section for use. A fillet 26 is shown attached to the lower section 27. The point from which the fillet 25 has been detached from the upper section is labelled 28.

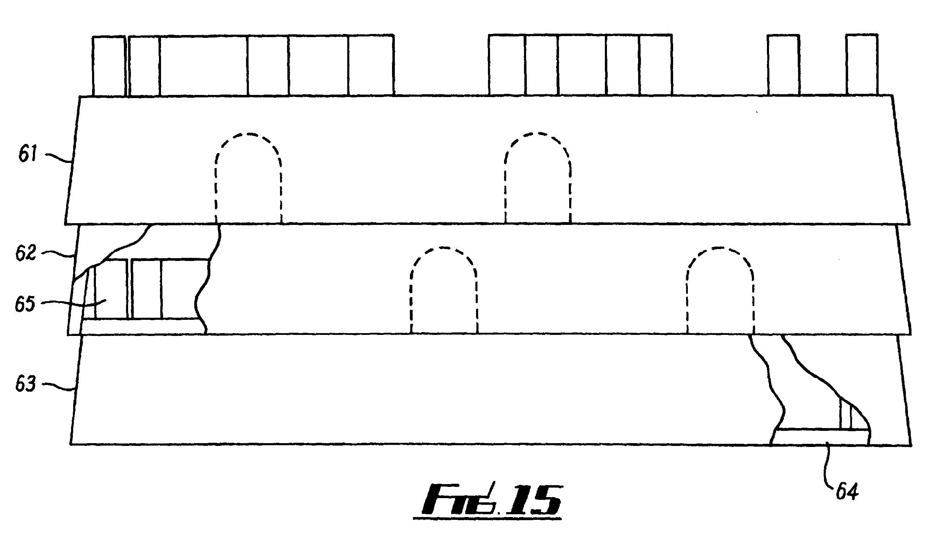

Figure 10 shows an alternative embodiment of a junction box section, formed from two interlocking pieces. The section is generally rectangular in cross-section and is formed from two identical halves. Each half includes male 30 and female 31 cooperating formations which may be engaged respectively with the female and male portions of another half by lowering the female formation 31, which comprises an opening open to the bottom of the section, over the male formation 30, which comprises a projection. Each half also includes two types of receiving means. The first type 33 takes the form of the receiving means of the embodiment shown in Figure 1. The second type 33 comprises two projecting walls having holes formed therethrough to receive one or more rods 34.

Figure 11 shows an alternative embodiment which comprises two different pieces. One piece includes a step 35.

Other embodiments are possible using different forms of cooperating formations on each piece, for example a dovetail joint.

Figure 12 is a side elevational view of the end of two stacked rows of another embodiment of a section according to the invention. This embodiment is generally similar to that illustrated in figure 4. It comprises a short open ended tube defining a generally rectangular opening and having outwardly curved, convex, sidewalls. It includes two types of receiving means 40, 41 and a step 42, all of which are integrally moulded.

Where this embodiment differs from that of figures 1 to 4 is that it includes projections 43 projecting from each of its four corners. The projections 43 include flat outer surfaces and serve as supports which enable the section to stand stably on end on one of its sides, and for another similarly oriented section to be supported on top.

The projections 43 are moulded integrally with the section and their cross-sectional dimensions are similar to those of the thickest part of the sides of the section.

In order that the section may be supported on the projections 43, each projection has an outer flat surface which lies in the same plane as an outer flat surface of each adjacent projection, and the plane lie on or outside the outer surface of the remainder of the section.

In particular, each projection 43 has two substantially perpendicular outside surfaces which form the corners of a rectangle which extends around the outside of the section. This is shown by broken line 44. The section can therefore stand on end on any of its four sides and can support a similar section on top, as shown in figure 12.

This confers advantages when transporting and storing sections. A convenient way to handle and transport sections is to stack a number, say five, in the manner shown in figures 5, 6 as if building a junction box and to secure (band) them together using tension strapping. The five sections can then be handled as a unit. Stacks of sections with convex sides of the type shown in figures 1 to 4 are only stable if supported on their top or bottom.

They must therefore be placed stably on a pallet, battens or similar to enable them to be handled with a fork lift truck . However, with the embodiment of figure 12 a banded stack of sections can be placed stably on one of its sides. When in this orientation it can be handled by a fork lift truck by simply inserting the fork through the aperture defined by the sections. This is easier and more convenient than using a pallet or the like, which is not required.

To handle sections of the type shown in figures 1 to 4 in this way could be hazardous. A banded stack of such sections when placed on its side is unstable. It is able to rock on the convex surface of the its side. Supporting the sections on their convex sides could also cause damage to the sections. For example, if two or more banded units of sections were stacked on top of each other on their sides the sides of the sections in the lowermost unit would have to support the weight of the units on top. The point of greatest stress would be the centre of each side of the section. Deformation of the section through creep would most likely occur. However, with the embodiment of figure 12, the load of sections stacked on top is taken mainly through its upright sides. Banded units of sections can therefore be stacked on their sides without risk of deformation.

By stacking sections this way, as opposed to flat on pallets, it is found that the increase in stability and handle-ability permits an increase of about 30% in the number that may safely loaded onto a given lorry, leading to a saving in transport costs.

Another advantage of provision of projections is an improved resistance to ground pressure for installed underground junction boxes. As previously mentioned a junction box section with convex sidewalls has a greater resistance to inwardly directed ground pressure than one with straight sidewalls. This is, at least in part, because the effect of inward pressure on opposed sidewalls is to straighten them, driving the other two sidewalls apart. This is resisted by the ground pressure on the said other two walls. The projections provide an increased area against which the ground pressure can act, reducing the likelihood of them being forced apart.

The projections also serve to increase the strength of the corners of a section, usually their weakest point, through increasing the thickness of the structure.

Another embodiment is shown in Figures 13 and 14. This section shares some features with previously described embodiments. Referring to

Figures 13 and 14 it is moulded in one piece from recycled plastics material and takes the form of a short open ended tube comprising inner 50 and outer convex 51 walls. These walls are joined by a number of cross-reinforcement portions 52 between which are cavities 53 which are open to the underside of the section. Around the periphery of the underside of the section the outer wall 51 projects above the cross-reinforcement portions 52 so that if the section is placed on a flat surface it will be supported on the bottom of the outer wall 51 but if stacked on another section it will be supported on the bottom of the cross-reinforcement portions and the outer wall 51 will extend around the outside of the section below.

The section includes provision for the formation of apertures at eight points around the section to permit the passage of cables or other services into a junction box formed by the sections. At each point there is an opening in the inner wall 50 and a corresponding region of reduced thickness 54 in the outer wall 51, shown by broken lines in Figure 13, which may be easily knocked or cut out to form an aperture open to the bottom of the section.

The section also includes two forms of integrally moulded receiving means 55 and 56 and a step 57, being of similar form to those identified by reference numerals 32, 33 and 35 respectively in Figures 10 and 11. The section also includes an integrally moulded bracket 58, similar to that referenced 15 in Figure 5, connected to the section by frangible portions 59. When separated from the section the bracket can be engaged with any of the receiving means 55.

As with the other described embodiments the inner 50 and outer 51 walls are joined together by a top portion 60. Where this embodiment differs from the others is through the provision of upstanding formations 61 which extend above the surface of the top portion 60. Formations 61 are hollow, integrally moulded with the section and arranged to fit closely into the cavities 53 of a similar section stacked on top. In plan view the formations are the same shape as the cavities shown in the underplan view of Figure 14. When similar sections are stacked the formations of one section fit into the cavities of the section above so that the stacked sections engage with each other.

The purpose of the formations 61 is to increase the resistance of a junction box formed from the sections to external forces caused by material, sure Funding the box when installed underground. The formations contribute to this in a number of ways.

Firstly they increase the bulk of individual segments, increasing their strength. In particular, they extend over the points 54 where provision is made for formation of an aperture through the section. This is usually the point where the section is weakest, because of the absence of an inner wall and the reduced thickness of the outer wall.

Secondly, the formations 61 increase the resistance of a section stacked on top to external forces. This is due to the formations 61 both bracing the inner and outer walls of the section on top apart, by filling the cavities between them, and serving to transmit load subjected to one segment to others in a stack. Sharing load in this way enables a junction box to withstand localised forces greater than those which could be resisted by a single section alone. It is found that by sharing load between sections is possible to reduce the thickness of material used to form the section, compared to a section without upstanding formations. The result is that the overall amount of material used to form the section is little more than that required to form one without formations.

The formations also help maintain the alignment of stacked sections. Referring to Figure 15 there are shown three stacked sections, forming the lower part of a junction box. The upper two sections 61 and 62 are the same as that shown in Figures 13 and 14. The lower section 63 is similar, save that it does not have provision for the formation of apertures through the sidewalls. Part of the lower 63 and middle 62 sections is shown cut away to reveal internal detail.

The lower section 63 forms the bottom of a junction box and is placed over a base portion 64 which comprise a sheet of plastic material. The lower section 63 includes upstanding formations 65 which fit into the cavities between the inner and outer walls of the section 62 above. Likewise, section 62 also has upstanding formations (not shown) which are received into the cavities of section 61. It will be noted that upstanding formations are not provided at the point where apertures may be formed through the section stacked on top. By arranging provision for apertures asymmetrically along the long sides of the sections and stacking them in an oppositely oriented fashion it is possible for an upstanding formation to extend over each point where an aperture may be formed, without it interfering with those of the section stacked on top.

The top most section of a stack forming a box should not have upstanding formations.

The above embodiments are described by way of example only. Many variations are possible without departing from the invention. For instance the features of some embodiments may be combined together to form different embodiments, for example the projections of the embodiment of Figures 12 and the formations of the embodiment of Figures 13 and 14.

## Claims

1. A stackable moulded junction box section characterised by an integrally moulded support means (8,9,32,33,34,35, 40,41,42,55,56,57).

2. A section as claimed in claim 1, wherein the support means comprises a step (18,35,42,57) or cable support.

3. A section as claimed in claim 1, wherein the support means comprises a receiving means (9,32,33,34,40,41,55,56) for receiving and supporting a separate component (16).

4. A section as claimed in claim 3, further comprising a component (16) supported by the receiving means and wherein the receiving means (9) and the supported component respectively comprise engageable formations.

5. A section as claimed in claim 3, further comprising an integrally moulded component (58) which may be separated from the section and supported by the receiving means, the component and receiving means respectively comprising engageable formations.

6. A section as claimed in claim 5, wherein the component and remainder of the section are joined by a frangible portion (59).

7. A section as claimed in any of claims 3 to 6, wherein the receiving means comprises an upright slot leading to an enclosed region of T-shaped cross-section the top of which is open and the bottom of which is closed.

8. A section as claimed in any preceding claim including more than one support means.

9. A section as claimed in any preceding claim comprising a short open ended tube having an inner wall (1,50), defining an opening, and an outer wall (2,51).

10. A section as claimed in claim 9, wherein the outer wall is convex in shape to help the section resist compressive forces.

11. A section as claimed in claim 10 comprising projections (43) which serve as supports which enable the section to stand stably on end on its outer wall.

12. A section as claimed in claim 11, wherein the supports enable the section to be supported on end on its outer wall on another similarly oriented section.

13. A section as claimed in either claim 11 or 12, wherein the projections are integrally formed with the section.

14. A section as claimed in any of claims 11 to 13, wherein the section is generally rectangular and a projection is provided at each corner, and each projection includes two perpendicular flat outer surfaces which lie on two sides of and/or form the corners of a rectangle surrounding the section.

15. A section as claimed in any of claims 10 to 14, wherein a number of cavities (4) are formed between the inner and outer walls, separated by cross-reinforcement portions (5) which tie the inner and outer walls together.

16. A section as claimed in claim 15, wherein provision is made for the formation of apertures through the section to enable services to pass into an assembled junction box, said provision comprising an aperture formed through the inside wall and region between the inside and outside walls leading to a removable region (7,54) of the outer wall.

17. A section as claimed in claim 16, wherein the aperture anc removable region are formed adjacent to the lower edge of the section so that, when the removable region has been removed, the resultant aperture is open to the bottom of the section.

18. A section as claimed in any preceding claim including one or more upstanding formations (61) on its top surface arranged to fit into cavities open to the bottom of another similar section.

19. A section as claimed in any preceding claim comprising an integrally moulded fillet (26) which may be separated from the section and used to fill the gap between a conduit passing through an aperture in a junction box formed by sections, and the sections.

20. A section as claimed in any preceding claim moulded in a single piece.

21. A section as claimed in any of claims 1 to 19 comprising two or more separate pieces that may be assembled to form a complete section.

22. A section as claimed in claim 21, wherein each piece respectively includes a cooperating formation which enables it to be interlocked with another piece.

23. A junction box comprising a stack of sections as claimed in any preceding claim.

24. A junction box as claimed in claim 23, wherein two adjacent sections include a receiving means and a support is received simultaneously into the receiving means of each of the two adjacent sections.

25. A junction box as claimed in either claim 23 or 24, wherein each section includes an aperture, all the apertures are aligned and a tie bar extends through the aligned apertures to tie the sections together.

26. A junction box as claimed in any of claims 23 to 25, wherein the upper and lowermost sections of a stack do not include any provision for the formation of apertures for the passage of services.

27. A junction box as claimed in any of claims 23 to 26, wherein the lowermost section is placed over a base portion (15).
